# EUROPEAN PATENT APPLICATION

(11) **EP 0 559 099 A1**
(43) Date of publication of application: **08.09.1993**
(21) Application number: 93103092.8
(22) Date of filing: 26.02.1993
(51) Int. Cl.: F16D 69/02

(54) **Brake elements for use in a wheel brake**

(30) Priority: 05.03.1992 JP 11112/92 U
(71) Applicant: SHIMANO INC., Osaka (JP)
(72) Inventor: Ohta, Katsuyuki, Sakai-shi, Osaka (JP); Wada, Kazuo, Sakai-shi, Osaka (JP)
(74) Representative: Säger, Manfred, Dipl.-Ing.

(57) **Abstract**

A brake element for use in a wheel brake for frictionally contacting a wheel rim. The brake element includes a base member formed of a rubber-like material, and a hard friction member mixed in granular form into the base member. The hard friction member has a hardness to cut through liquid layers formed on the wheel rim to increase a braking force. The surface of the brake element which is opposed to the wheel rim when assembled into the wheel brake is cut to expose the hard friction member on the surface.

## Description

### BACKGROUND OF THE INVENTION

### FIELD OF THE INVENTION

The present invention relates to brake elements used in a wheel brake for frictionally contacting braked parts of a wheel, and to a method of manufacturing the brake elements.

### DESCRIPTION OF THE RELATED ART

Conventionally, the brake elements used in a brake as noted above comprise pads having granules of a hard friction material mixed into a rubber-like base material. The presence of the hard friction material is intended to provide an improved efficiency of friction with the braked parts, i.e. an improved braking effect.

The brake elements of this type are manufactured by molding a mixture of the rubber-like base material and hard friction material. However, the hard friction material substantially is not exposed on surfaces of the brake elements, but the rubber-like base material alone forms the surfaces acting as working surfaces to contact the braked parts of a wheel. When the surfaces become worn after the brake is used to some extent, the hard friction material begins to appear on the surfaces. Only then, the hard friction material finely cuts liquid layers formed on the wheel at wet times, thereby to improve the efficiency of frictional contact between the brake elements and braked parts, i.e the braking effect.

### SUMMARY OF THE INVENTION

The object of the present invention is to provide brake elements which produce an improved braking effect when braked parts of a wheel are wet, which is possible with a new bicycle or during an initial stage of use of new brake elements replacing worn brake elements.

The above object is fulfilled, according to the present invention, by brake elements each comprising a base member formed of a rubber-like material, and a hard friction member mixed in granular form into the base member, the hard friction member having a hardness to cut through liquid layers formed on a braked object to increase a braking force, wherein the hard friction member is exposed on a contact surface of the base member opposed to the braked object.

These brake elements are manufactured by the steps of forming a basic body of each brake element from a mixture of a rubber-like base material and a hard friction member, and cutting a surface of the basic body which is to be opposed to a braked object, thereby to expose the hard friction member on the surface.

Conventionally, brake elements are formed by molding a rubber-like base material in unhardened state with a hard friction member mixed thereinto. The rubber-like base material lies in film form between a forming die and the hard friction member, thereby resulting in a surface layer formed of the rubber-like base material alone through contact with a surface of the forming die. This surface of each brake element is finished so as to overlie the hard friction member. Consequently, friction between the hard friction member and braked object cannot be obtained before the surface layer initially acting as a braking surface becomes worn with use, to expose the hard friction member. With the brake elements according to the present invention, since the surface of the rubber-like base material is cut, the hard friction member is exposed from the beginning of use of the brake elements to make a sufficient contact with the braked object.

Thus, with the brake elements according to the present invention, the hard friction member mixed into the rubber-like base material is exposed on an actual working surface. This always produces an excellent braking force at wet times, from the beginning of use, compared with the conventional brake elements. A layer of a mold release agent used when forming each brake element, and adhering to the surface, is removed in the cutting process to eliminate any adverse effect thereof.

Other features and advantages of the invention will be apparent from the following description of the embodiment taken with reference to the accompanying drawings.

### BRIEF DESCRIPTION OF THE DRAWINGS

Fig. 1 is a front view of a cantilever brake having brake elements according to the present invention,
Fig. 2 is a sectional view of a portion of a brake element before a cutting process, and
Fig. 3 is a sectional view of the portion of the brake element after the cutting process.

### DETAILED DESCRIPTION OF THE PREFERRED EMBODIMENT

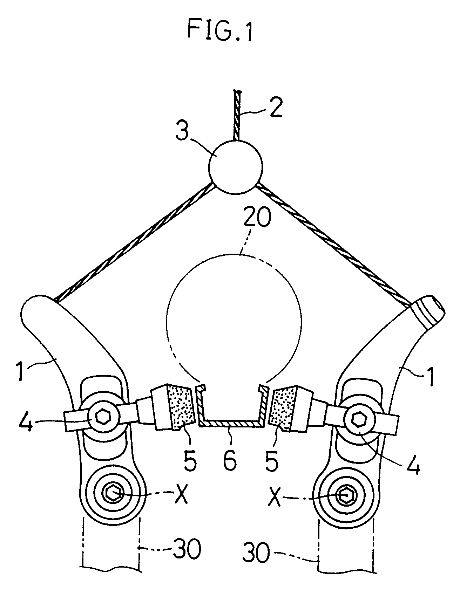

Fig. 1 shows a cantilever brake of a bicycle having brake elements according to the present invention. The brake includes a pair of brake calipers 1 attached to bicycle frames 30 opposed to each other across a wheel 20. Each of the brake calipers 1 is pivotable relative to the frame 30 about an axis X. One of the calipers 1 is connected at a free end thereof to a brake cable 2, while the other caliper 1 is connected at a free end thereof to the brake cable 2 through a connector 3.

When the brake cable 2 is pulled, the right and left brake calipers 1 pivot upward under the operating force. This causes brake elements 5 attached to intermediate positions of the brake calipers 1 through clamps 4 to press upon side surfaces of a wheel rim 6 to apply friction brakes thereto. When the brake cable 2 is relaxed, the brake calipers 1 pivot downward under the biasing force of return springs (not shown) acting on proximal ends thereof. As a result, the brakes elements 5 retract from the side surfaces of the wheel rim 6 to cancel the brakes.

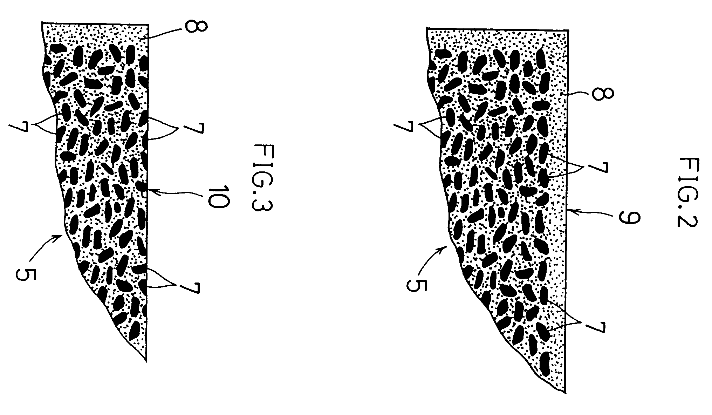

The brake elements 5 are formed by injection-molding or compression-molding a rubber compound having nitrile butadiene rubber as a main component, and granules of aluminum oxide (Al2O3) compounded therewith in a predetermined weight ratio. Thus, the brake elements 5 are formed of nitrile butadiene rubber 8 mixed with aluminum oxide 7 as shown in Fig. 2. The rubber compound has a surface layer 9 formed through contact with a forming die during the injection-molding or compression-molding process. This surface layer 9 is ground with a rotating grinder such as a grindstone to form a braking surface 10 as shown in Fig. 3. The granules of aluminum oxide 7 are exposed on the braking surface 10.

What is important is that, when each brake element 5 is formed, nitrile butadiene rubber 8 lies between the forming die and granules of aluminum oxide 7, whereby the surface layer 9 is formed through contact with the forming die, to conceal aluminum oxide 7 thereunder. Consequently, if the surface layer 9 were used as the braking surface, aluminum oxide 7 would not contact the wheel rim 6 though the braking surface would. Thus, the surface layer 9 is ground to allow part of aluminum oxide 7 to be exposed on the braking surface 10 as shown in Fig. 3. When the braking surface 10 contacts the wheel rim 6, aluminum oxide 7 also contacts the wheel rim 6.

When the wheel 20 is dry, nitrile butadiene rubber 8 will readily make tight contact with the wheel rim 6 to apply a strong frictional resistance thereto. When the wheel 20 is wet, nitrile butadiene rubber 8 may not apply a frictional resistance because of liquid layers formed on surfaces of the wheel rim 6. However, aluminum oxide 7, which is harder than the wheel rim 6, will cut the liquid layers on the rim surfaces and grip the wheel rim 6 to apply a frictional resistance.

Since aluminum oxide 7 is exposed on the braking surface 10, aluminum oxide 7, when the wheel 20 is wet, positively contacts and brakes the wheel rim 6 even in an initial use stage of the brake elements 5.

Nitrile butadiene rubber may be replaced with one of varied synthetic rubbers, such as styrene-butadiene rubber. A synthetic resin or natural rubber may be used instead. These substances are collectively called herein a rubber-like base material 8.

The brake elements may, instead of directly braking the wheel rim, apply the braking force to an element attached specially for the braking purpose to the wheel.

Aluminum oxide may be replaced with silicon carbide (SiC). Aluminum oxide and silicon carbide have a Moh's hardness equal to or greater than alumite. Thus, aluminum oxide or silicon carbide will advantageously cut liquid layers when braking an alumite-finished object such as an aluminum wheel rim. However, for braking a steel wheel rim which is softer than alumite, it is possible to employ a substance having a lower degree of hardness than aluminum oxide or silicon carbide. That is, a substance having a hardness equal to or greater than the braked object may be used to cut liquid layers and apply braking action. The wheel rim 6 is called a braked object 6, and aluminum oxide and the like are collectively called a hard friction member 7.

The braking surface on which the hard friction member is exposed may be formed by a cutting process instead of the grinding process as in the foregoing embodiment. These processes are collectively called a cutting process. The braking surface may be a smooth, flat surface formed by cutting also parts of the hard friction member during the surface cutting process, whereby the parts of the hard friction member appearing on the braking surface are formed flush with the rubber-like base material. The braking surface may be an unsmooth surface with a level difference between the rubber-like base material and hard friction member. In the latter case, parts of the hard friction member may protrude from the rubber-like base material, or may be recessed in the rubber-like base material though visible on the braking surface.

## Claims

1. A brake element for use in a wheel brake for frictionally contacting a braked object on a wheel, comprising:
a base member formed of a rubber-like material; and
a hard friction member mixed in granular form into said base member, said hard friction member having a hardness to cut through liquid layers formed on said braked object to increase a braking force;
wherein said hard friction member is exposed on a contact surface of said base member opposed to said braked object.

2. A brake element as defined in claim 1, wherein said base member includes nitrile butadiene rubber as a main component thereof.

3. A brake element as defined in claim 1, wherein said hard friction member is aluminum oxide.

4. A method of manufacturing a brake element for use in a wheel brake for frictionally contacting a braked object on a wheel, comprising the steps of:
forming a basic body of said brake element from a mixture of a rubber-like base material and a hard friction member; and
cutting a surface of said basic body which is to be opposed to said braked object, thereby to expose said hard friction member on said surface.
